# EUROPEAN PATENT APPLICATION

(11) **EP 3 309 690 A1**
(43) Date of publication of application: **18.04.2018**
(21) Application number: 17196568.4
(22) Date of filing: 16.10.2017
(51) Int. Cl.: G06F 17/18

(54) **SYSTEM AND METHOD FOR DATA PRE-PROCESSING**

(30) Priority: 17.10.2016 IN 201621035461
(71) Applicant: Tata Consultancy Services Limited, Maharashtra (IN)
(72) Inventor: RUNKANA, Venkataramana, 411013 Pune, Maharashtra (IN); PANDYA, Rohan, 411013 Pune, Maharashtra (IN); KUMAR, Rajan, 411013 Pune, Maharashtra (IN); PANDA, Aniruddha, 411013 Pune, Maharashtra (IN)
(74) Representative: Goddar, Heinz J.

(57) **Abstract**

The method for data pre-processing includes performing a plurality of iterations for processing integrated data associated with a manufacturing process. Each iteration comprises removing outliers from the integrated data using a multi-level outlier model to obtain a filtered data. Further, categorizing the filtered data into multiple categories to identify missing data based on a frequency of occurrence of various parameters. Subsequently, selectively imputing the missing data based on the multiple categories to obtain imputed data and clustering the imputed data into various data clusters is performed based on a predefined criteria. Furthermore, the method includes determining after every iteration, whether the imputed data associated with a current iteration is clustered into the same data clusters as associated with a previous iteration. The plurality of iterations are performed until the data clusters in the previous iteration and the current iterations are similar.

## Description

### CROSS-REFERENCE TO RELATED APPLICATIONS AND PRIORITY

The present application claims priority to Indian provisional application No. 201621035461, (Title: System and Method for Data Pre-Processing), filed in India on October 17, 2016.

### TECHNICAL FIELD

The present subject matter relates, in general, to data pre-processing techniques, and, more particularly, to a method and system for implementing data pre-processing techniques through outlier analysis and multivariate imputation process.

### BACKGROUND

Data analysis is a process of cleaning and transforming raw data into useful information. Data analysis includes pre-processing which is one among several techniques that is utilized for transforming raw data into a format that can be utilized for further processing. This processed data is then used for further data mining and analysis. Usually, the real world data is often incomplete and inconsistent and is likely to include certain errors. The real world data that is currently available sometimes contains noise and some forms of missing data. Additionally this data may contain outliers that are segregated unevenly in different clusters. Outliers are data points that are distant from other data points.

Existing pre-processing techniques for cleaning the data conducts data filtering in a highly computational technique. The steps in this kind of data pre-processing technique further includes outlier analysis and data imputation. In case of outlier analysis of this kind, there are different outliers such as obvious outliers, and uncommon values, such as negative temperatures and pressures in case of operations involved in manufacturing and process industries. There are various types of outlier algorithms, but these cannot be implemented in all cases. Additionally, while carrying out outlier analysis for past historical data, there are cases of various operating conditions. In such cases, an outlier analysis over the entire period is not usually feasible as the distribution of the parameter might vary over certain operating conditions and over diverse periods of operation in a plant.

There are some key quality parameters whose sampling frequencies are less due to various reasons. Due to the low availability of data, these variables are often not used in the analysis. Also, in case of multivariate imputation, there are possibilities that the imputed values might turn out to be outliers compared to the operating conditions of the plant. As such outliers that are part of the imputed values of the pre-processed data leads to inefficient and inaccurate data pre-processing.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

In view of the foregoing, various embodiments herein provide methods and systems for data pre-processing. In an aspect, a computer implemented method for data pre-processing associated in a manufacturing process is provided. The method can be executed by a computing device. The method includes performing, at the computing device, a plurality of iterations for processing an integrated data associated with the manufacturing process. Each iteration of the plurality of iterations comprises removing outliers from the integrated data using a multi-level outlier model to obtain a filtered data. The filtered data is associated with a plurality of parameters indicative of the manufacturing process. Further, the method includes categorizing the filtered data into a plurality of categories to identify missing data from the filtered data. The categorizing of the filtered data is based on a frequency of occurrence of one or more parameters of the plurality of parameters in the filtered data.

Subsequently, selectively imputing the missing data based at least on one of the plurality of categories of the missing data is performed to obtain imputed data and accordingly cluster the imputed data into one or more data clusters. The clustering is based on at least one predefined criteria associated with a plurality of operating conditions of the manufacturing process. Furthermore, the method includes determining after every iteration of the plurality of iterations, whether the imputed data associated with a current iteration is clustered into the one or more data clusters associated with a previous iteration. The plurality of iterations are performed until the one or more data clusters in the previous iteration and the current iterations are determined to be similar.

In another aspect, a computer-implemented system for data pre-processing is provided. The system includes a memory, and a processor. The memory stores instructions and a repository. The memory is coupled to the processor, such that the processor is configured by said instructions stored in the memory to perform a plurality of iterations for processing an integrated data associated with the manufacturing process. Each iteration of the plurality of iterations comprises removing outliers from the integrated data using a multi-level outlier model to obtain a filtered data. The filtered data is associated with a plurality of parameters indicative of the manufacturing process. Further, the filtered data is additionally categorized into a plurality of categories to identify missing data from the filtered data. The categorizing of the filtered data is based on a frequency of occurrence of one or more parameters of the plurality of parameters in the filtered data. Subsequently, the process selectively imputing the missing data is based at least on one of the plurality of categories of the missing data to obtain imputed data and accordingly clustering the imputed data into one or more data clusters. The clustering is based on at least one predefined criteria associated with a plurality of operating conditions of the manufacturing process. Furthermore, the method includes determining after every iteration of the plurality of iterations, whether the imputed data associated with a current iteration is clustered into the one or more data clusters associated with a previous iteration. The plurality of iterations are performed until the one or more data clusters in the previous iteration and the current iterations are determined to be similar.

In yet another aspect, a non-transitory computer-readable medium having embodied thereon a computer program for executing a method for data pre-processing is provided. The method includes, performing, at the computing device, a plurality of iterations for processing an integrated data associated with the manufacturing process. Each iteration of the plurality of iterations comprises removing outliers from the integrated data using a multi-level outlier model to obtain a filtered data. The filtered data is associated with a plurality of parameters indicative of the manufacturing process. Further, filtered data is categorized into a plurality of categories to identify missing data from the filtered data. The categorizing of the filtered data is based on a frequency of occurrence of one or more parameters of the plurality of parameters in the filtered data. Subsequently, the process of selectively imputing the missing data is performed based at least on one of the plurality of categories of the missing data to obtain imputed data and clustering the imputed data into one or more data clusters. The clustering is based on at least one predefined criteria associated with a plurality of operating conditions of the manufacturing process. Furthermore, the method includes determining after every iteration of the plurality of iterations, whether the imputed data associated with a current iteration is clustered into the one or more data clusters associated with a previous iteration. The plurality of iterations are performed until the one or more data clusters in the previous iteration and the current iterations are determined to be similar.

### BRIEF DESCRIPTION OF THE DRAWINGS

The embodiments herein will be better understood from the following detailed description with reference to the drawings, in which:
FIG. 1 illustrates a schematic block diagram of network implementation for data pre-processing, in accordance with an example embodiment;
FIG. 2 illustrates a block diagram of a system for data pre-processing, in accordance with an embodiment;
FIG. 3 illustrates a flow diagram depicting the process flow of method for data pre-processing, in accordance with an embodiment;
FIG. 4 illustrates a flow diagram depicting the process flow of data filtering, in accordance with an example embodiment;
FIG. 5 illustrates a flow diagram depicting an exemplary process flow of outlier analysis, in accordance with an example embodiment;
FIG. 6 illustrates a flow diagram depicting an exemplary process flow of availability analysis, in accordance with an example embodiment;
FIG. 7 illustrates a flow diagram depicting an exemplary process flow of missingness pattern seasonality check, in accordance with an example embodiment;
FIG. 8 illustrates a flow diagram depicting an exemplary process flow of multivariate imputation, in accordance with an example embodiment; and
FIGS. 9A, 9B, 9C, 9D and 9E illustrate a flow diagram depicting an exemplary of data sets obtained by data pre-processing.

### DETAILED DESCRIPTION

Unless specifically stated otherwise as apparent from the following discussions, it is to be appreciated that throughout the present disclosure, discussions utilizing terms such as "determining" or "generating" or "comparing" or the like, refer to the action and processes of a computer system, or similar electronic activity detection device, that manipulates and transforms data represented as physical (electronic) quantities within the computer system's registers and memories into other data similarly represented as physical quantities within the computer system memories or registers or other such information storage, transmission or display devices.

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The methods and systems are not limited to the specific embodiments described herein. In addition, the method and system can be practiced independently and separately from other modules and methods described herein. Each device element/module and method can be used in combination with other elements/modules and other methods.

Throughout the description and claims of this complete specification, the word "comprise" and variations of the word, such as "comprising" and "comprises," means "including but not limited to," and is not intended to exclude, for example, other additives, components, integers or steps. "Exemplary" means "an example of' and is not intended to convey an indication of a preferred or ideal embodiment. "Such as" is not used in a restrictive sense, but for explanatory purposes.

For a firmware and/or software implementation, the methodologies can be implemented with modules (e.g., procedures, functions, and so on) that perform the functions described herein. Any machine readable medium tangibly embodying instructions can be used in implementing the methodologies described herein. For example, software codes and programs can be stored in a memory and executed by a processing unit.

In another firmware and/or software implementation, the functions may be stored as one or more instructions or code on a non-transitory computer-readable medium. Examples include computer-readable media encoded with a data structure and computer-readable media encoded with a computer program. The computer-readable media may take the form of an article of manufacturer. The computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blue-ray disc where disks usually reproduce data magnetically, while discs reproduce data optically with lasers. Combinations of the above should also be included within the scope of computer-readable media.

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

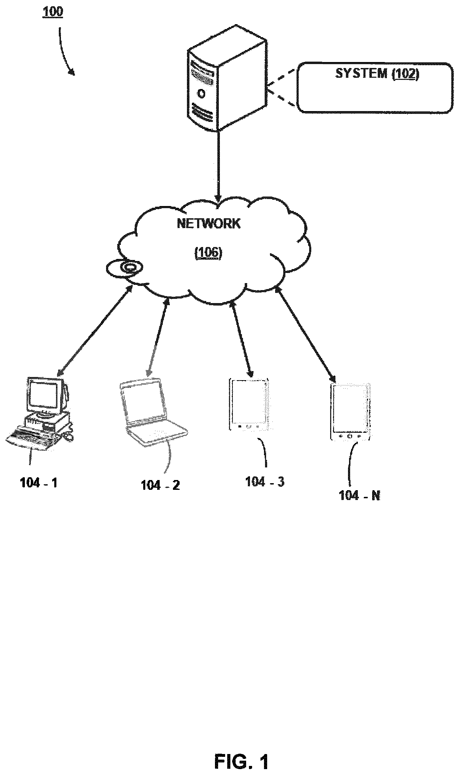

The embodiments herein provide a system and a method to enable data pre-processing for manufacturing and process industry. For example, the disclosed system enables pre-processing of data by utilizing data filtering, outlier removal, imputation and clustering. It will be noted herein that the example scenarios are only illustrative, and included herein for the purpose of clarity of the embodiments. The disclosed method and system are not limited to the cited example scenarios and can be included in a variety of applications and scenarios without departing from the scope of the embodiments. Referring now to the drawings, and more particularly to FIGS. 1 through 9E, where similar reference characters denote corresponding features consistently throughout the figures, there are shown preferred embodiments and these embodiments are described in the context of the following exemplary system and/or method.

The purpose of pre-processing the data is to obtain processed data that can be further utilized for data mining and analysis. Raw data is obtained from a variety of sources, for example, but not limited to distributed control system (DCS), laboratory information management system (LIMS), Enterprise resource planning (ERP), Manual entry and the like, and includes a plurality of parameters. The raw data may include a lot of inconsistencies and noise (unwanted data). The noise is required to be removed to increase the usability of the raw data for further processing. Data filtering is utilized to remove the noise with minimal user input. Further, multiple methods are applied for outlier removal based on nature of parameters and various outliers. Also, the imputation is carried out using a combination of univariate and multivariate methods based on the availability and missingness nature of the parameters. Subsequently, clustering is performed to identify one or more different regimes of operation of a manufacturing process or a business operation. Finally, a stopping criterion of stability of points in different clusters is chosen to get a desired clean dataset. The present system and method for data pre-processing can be utilized for any type of business data processing.

FIG. 1 illustrates a schematic block diagram of network implementation 100 for data pre-processing, in accordance with an example embodiment of the present subject matter. The network implementation 100 is shown to include a system 102 which can be implemented in one or more computing devices, devices such as devices 104-1, 104-2...104-N, and a communication network 106 for facilitating communication between the system 102 and the user devices 104-1, 104-2...104-N. In one embodiment, the system 102 enables a common platform for data pre-processing. Although the present subject matter is explained considering that the system 102 is implemented as a software application on a server, it may be understood that the system 102 may also be implemented as a variety of computing platforms, such as Android® , iOS®, Symbian®, Windows®, Blackberry®, and the like. It will be understood that the system 102 may be accessed by multiple users through the one or more devices 104-1, 104-2...104-N, collectively referred to as devices 104 hereinafter, or applications residing on the devices 104. Examples of the devices 104 may include, but are not limited to, a portable computer, a personal digital assistant, a handheld device, and a workstation mobile headset, and the like.

In one implementation, the communication network 106 may be a wireless network, a wired network or a combination thereof. The communication network 106 can be implemented as one of the different types of networks, such as intranet, local area network (LAN), wide area network (WAN), the internet, and the like. The communication network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

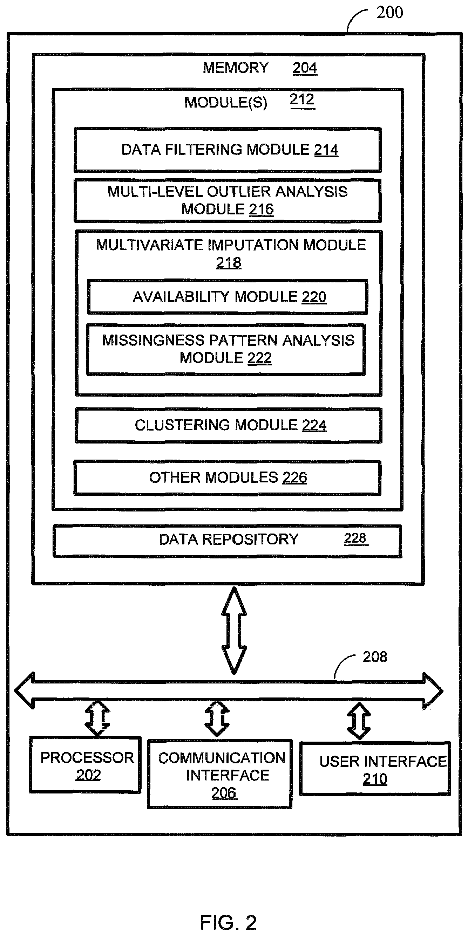

A detailed data pre-processing system is described further with reference to FIG. 2 An example of a system embodied in the computing device (for example, the device 102 of FIG. 1) for provisioning of the data pre-processing is described further with reference to FIG. 2.

FIG. 2 illustrates a block diagram of a system 200 for data pre-processing, in accordance with an embodiment of the present disclosure. In an embodiment, the system 200 may be embodied or executed in a computing device, for instance the computing device 102 (FIG. 1). Alternatively, the system 200 may be a distributed system distributed in a plurality of computing devices associated with the data pre-processing. The system 200 includes or is otherwise in communication with one or more hardware processors such as a processor 202, at least one memory such as a memory 204, a communication interface 206 and a user interface 210. The processor 202, memory 204, the communication interface 206 and the user interface 210 may be coupled by a system bus such as a system bus 208 or a similar mechanism. Various components of the system 200, along with functionalities thereof are explained below.

In an embodiment, the processor 202 includes circuitry implementing, among others, audio and logic functions associated with the communication. For example, the processor 202 may include, but is not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits. The processor 202 may include, among other things, a clock, an arithmetic logic unit (ALU) and logic gates configured to support operation of the processor 202. Further, the processor 202 may include functionality to execute one or more software programs, which may be stored in the memory 204 or otherwise accessible to the processor 202.

The at least one memory such as a memory 204, may store any number of pieces of information, and data, used by the system to implement the functions of the system 200. The memory 204 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 204 may be configured to store information, data, applications, instructions or the like for enabling the call control server to carry out various functions in accordance with various example embodiments. Additionally or alternatively, the memory 204 may be configured to store instructions which when executed by the processor 202 causes the system 200 to behave in a manner as described in various embodiments.

The memory 204 also includes module(s) 212 and a data repository 228. The module(s) 212 include, for example, a data filtering module 214, a multi-level outlier analysis module 216, a multivariate imputation module 218, a clustering module 224, and other module(s) 226. The multivariate imputation module 218 further includes an availability module 220 and a missingness pattern analysis module 222. The other module(s) 226 may include programs or coded instructions that supplement applications or functions performed by the data pre-processing system 200. The data repository 228 includes data archived from various data sources and the like. Further, the data repository 228 amongst other things, serves as a repository for storing data that is processed, received, or generated as a result of the execution of one or more modules in the module(s) 212.

Although the data repository 228 is shown internal to the data pre-processing system 200, it will be noted that, in alternate embodiments, the data repository 228 can also be implemented external to the data pre-processing system 200, where the data repository 228 may be stored within a database communicatively coupled to the data pre-processing system 200. The data contained within such external database may be periodically updated. For example, new data may be added into the database and/or existing data may be modified and/or non-useful data may be deleted from the database. In one example, the data may be stored in an external system. In another embodiment, the data stored in the data repository 228 may be distributed between the data pre-processing system 200 and the external database.

The communication interface 206 is configured to facilitate communication between the network 106 and the system 200. The communication interface 206 may be in form of a wireless connection or a wired connection. Examples of wireless communication interface 206 may include, but are not limited to, IEEE 802.11 (Wifi), BLUETOOTH®, or a wide-area wireless connection. Example of wired communication interface 206 includes, but is not limited to Ethernet.

In an example embodiment, a user interface 210 may be in communication with the processor 202. Examples of the user interface 210 include but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 210 may include, among other devices or elements, any or all of a speaker, a microphone, a display, and a keyboard, touch screen, or the like.

In an embodiment, the user interface 210 is implemented in a data pre-processing system. In this regard, the processor 202 may include user interface circuitry configured to control at least some functions of one or more elements of the user interface 210, such as, for example, a speaker, ringer, microphone, display, and/or the like. The processor 202 and/or user interface circuitry comprising the processor 202 may be configured to control one or more functions of one or more elements of the user interface 210 through computer program instructions, for example, software and/or firmware, stored on a memory, for example, the at least one memory 204, and/or the like, accessible to the processor 202.

In an embodiment, a set of instructions are used in the processing of functionalities of the system 200. The set of instructions may be in the form of a program or software. The software may be in the form of system software or application software. The data pre-processing system 200, may be facilitated through a computer implemented application available over a network such as the Internet.

In an example embodiment, the processor 202 is configured to, with the content of the memory 204, and optionally with other components described herein, to cause the system 200 to perform data pre-processing on a raw data. The raw data is archived from various data sources. The raw data can be from manufacturing processes, process plant, laboratory processes and the like. The data pre-processing transforms the raw data into a form that can be further utilized for data mining, analysis, diagnostics and prognostics. Herein, in an example embodiment the system 200 is described utilizing data obtained from a process plant. The process plant generates data from multiple sub units in various frequencies and also includes a variety of problems such as missing values in the raw data, noisy and unusable data, absurd values (for example out of range operating conditions, negative quality parameters and the like in case of a process plant) and the like. The system 200 comprises of four modules to perform pre-processing of data.

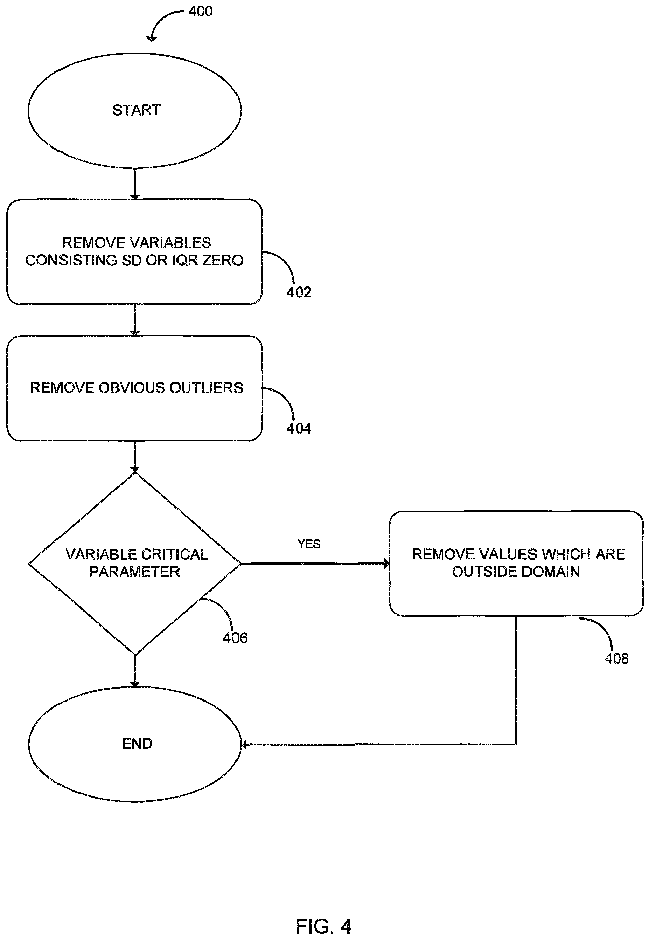

The raw data archived from various sources has to be filtered for removing one or more parameters which are erroneous due to fault in data acquisition process. This is carried out by the data filtering module 214 to obtain an integrated data. The data filtering module 214 is utilized to remove the parameters that pass no information such as standard deviation, zero interquartile range (IQR) and the like. Further, the data filtering module 214 utilizes a Kalman filter to smooth parameters which are noisy. The data filtering module 214 is further described in detail with reference to FIG. 4.

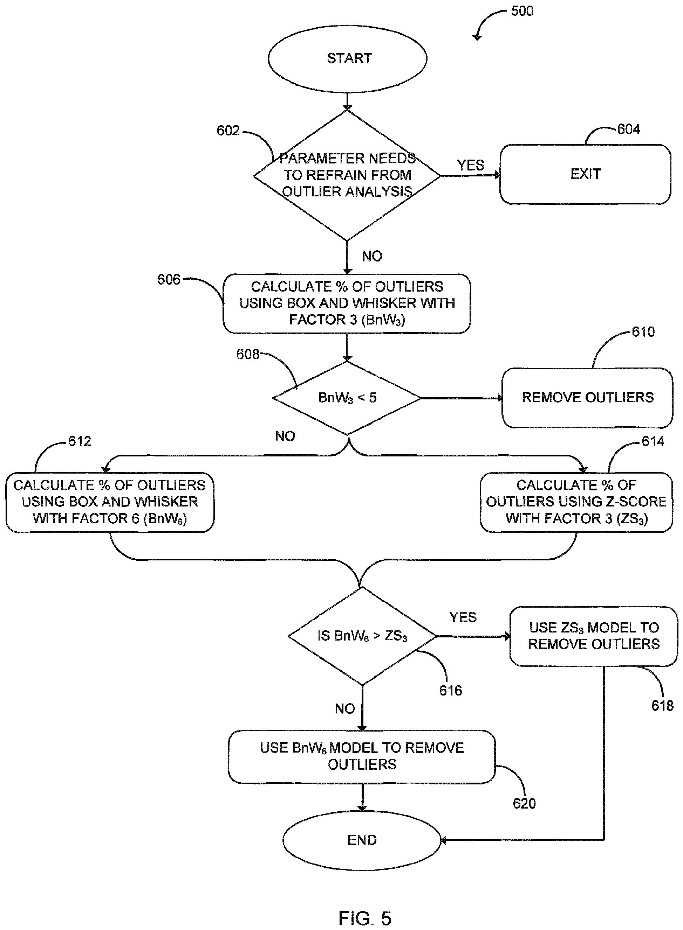

The integrated data obtained from the data filtering module 214 is utilized by the multi-level outlier analysis module 216 to remove one or more outliers to obtain a filtered data. The integrated data may include data points which are outside the normal range of a parameter and these data points are termed as outliers. The presence of outliers may lead to inflated error and substantial distortions of the parameters and statistical estimates. The statistical estimates are predicted values, which might not be accurately predicted if there are outliers, as the outliers would add noise to the data pre-processing system and reduce the data pre-processing system accuracy. The multi-level outlier analysis module 216 is a combination of a plurality of outlier removal models. Herein, the outlier removal models include one or more domain knowledge based outlier models, a box and whisker model and a z-score model. The domain knowledge based outlier models form a first level and the box and whisker model and the z-score model form the second level of the multi-level outlier analysis module 216. The outliers in the integrated data are first removed by utilizing the domain knowledge based outlier models and then a combination of the box and whisker model and the z-score model is utilized to remove the remaining outliers in the integrated data to obtain the filtered data. The multi-level outlier analysis module 216 is further described in detail with reference to FIG. 5.

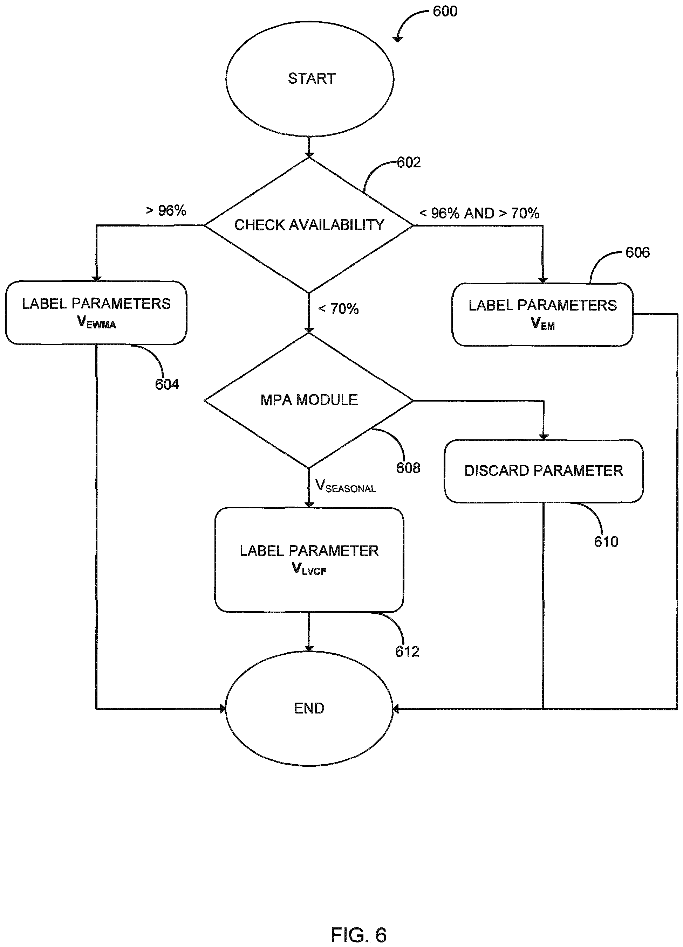

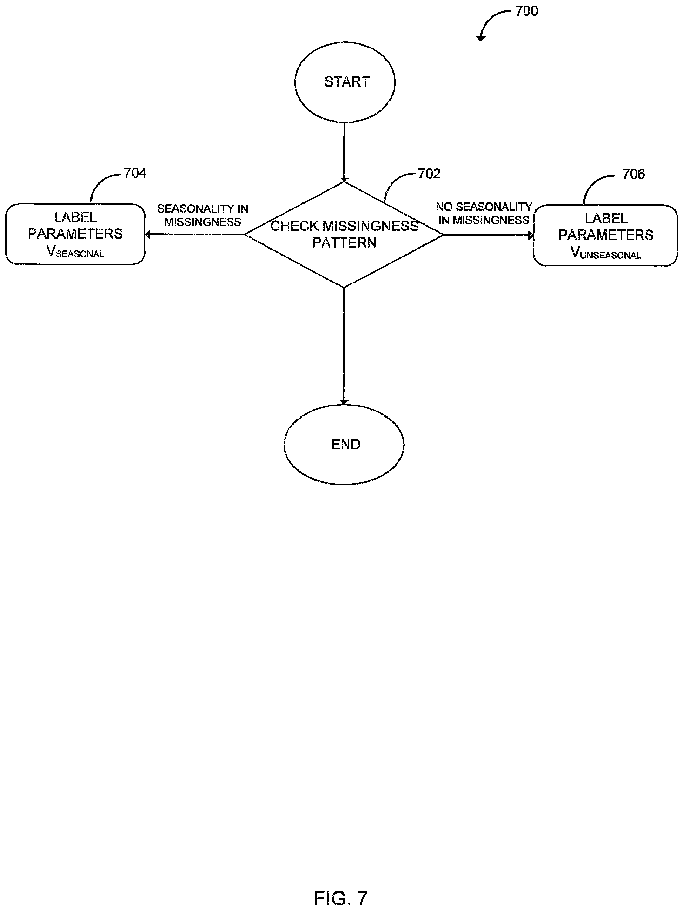

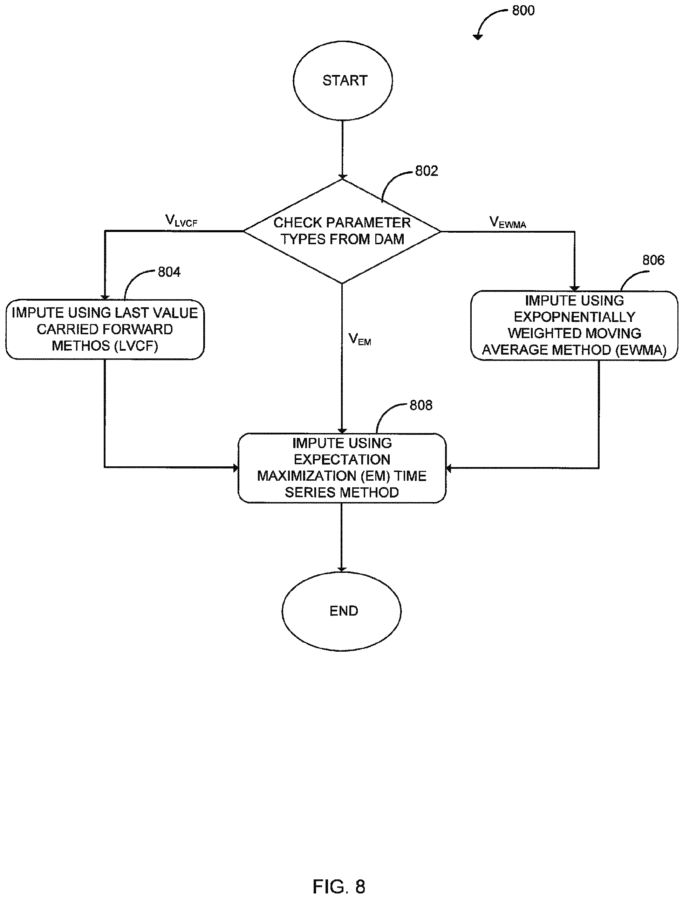

Further, the filtered data is utilized by the multivariate imputation module 218 to identify and impute missing data. The raw data available may have a lot of missing data. The raw data may include certain parameters whose frequency of measurement is less and these parameters are required for further analysis. The availability of the various parameters is calculated by the availability module 220 present within the multivariate imputation module 218. Further, based on the availability of the parameters the availability module 220 categorizes the parameters as V_{EWMA} (exponentially weighted moving average), V_{EM} (expectation maximization) and V_{LVCF} (last value carried forward). The categorization by the availability module 220 is further described in detail with reference to FIG. 6. Based on the categorization the missing parameters are imputed utilizing the missigness pattern analysis module 222 also present within the multivariate imputation module 218 is used to obtain an imputed data. The process of missiginess pattern analysis and imputation are further described in detail with reference to FIG. 7 and FIG. 8 respectively.

Further, the imputed data is clustered by the clustering module 224. The clustering is performed based on one or more operating regimes. Clustering is performed to differentiate various operating conditions. The clustering module 224 first identifies the number of clusters and then the imputed data is segregated into a predetermined number of clusters. The imputed data obtained is clustered into multiple datasets using k-means method. Number of optimum clusters is calculated using a Silhouette method.

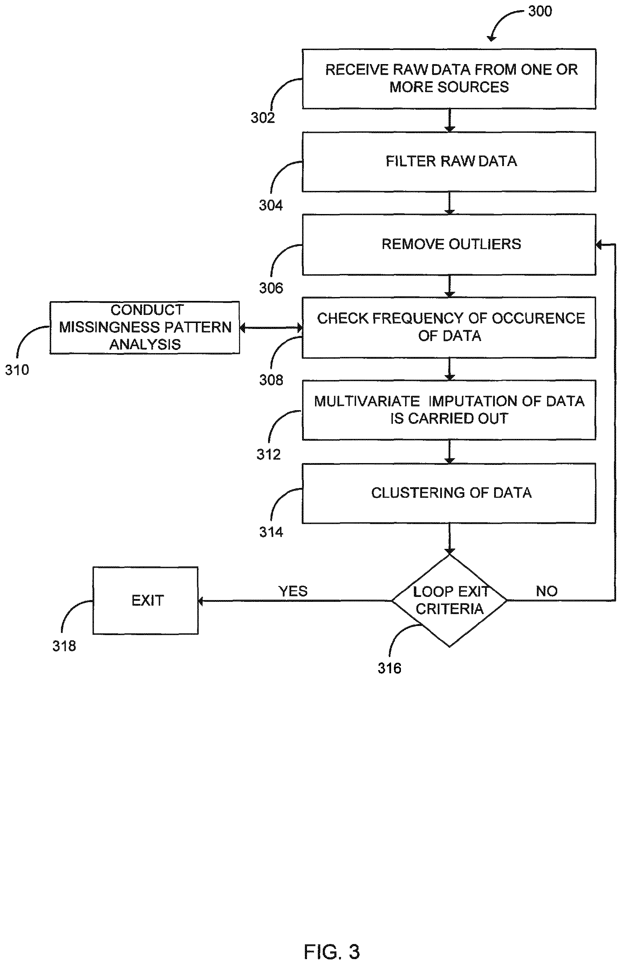

Furthermore, the system 200 iterates the data pre-processing process till the time the clustering of the parameters gives the same division of the parameters each time. The iteration process is performed as clustering is susceptible to outliers. The iteration process is terminated based on observation and points obtained in different clusters. The process of data pre-processing is further explained in detail with reference to FIG. 3.

FIG. 3 illustrates a flow diagram depicting the process flow of method 300 for data pre-processing, in accordance with an embodiment. In an embodiment, the method 300 for data pre-processing, can be implemented at a system, for example, the system 200 (FIG. 2).

At step 302 of method 300, the raw data is received from one or more sources. The raw data can pertain to data related to for example, but not limited to manufacturing industry, process industry, laboratory data and the like.

At step 304, the raw data is filtered utilizing the data filtering module 214 (FIG. 2) to remove noise from the raw data. The parameters in the raw data that do not provide information such as standard deviation are removed from the raw data to obtain integrated data in the step 304.

At step 306, one or more outliers are removed from the integrated data by the multi-level outlier analysis module 216 (FIG. 2). The integrated data may contain data points which are outside a normal range of a parameter, wherein these data points are termed as outliers. The integrated data includes parameters which should not undergo outlier analysis, such as the raw material quality, production data, product quality, size analysis, daily consumption data and the like. These parameter are first identified and are not considered for outlier analysis by the multi-level outlier analysis module 216. From the remaining parameters in the integrated data, the outliers are first removed by domain knowledge based outliers and herein the outliers are removed based on domain of the parameter. For example, the parameters such as temperature does not have negative values in case of a process plant, pressure sensors can be suction based (only negative) or positive which needs to be identified (suction pressure normally cannot have positive value). Hence, the parameters having negative temperature values and positive suction pressure values are considered as outliers and are then removed by the domain knowledge based outlier removal model. After the domain knowledge based outlier removal, a combination of a box and whisker model along with a z-score model is utilized for outlier analysis and removal to obtain filtered data. The outlier removal process is further described below with reference to FIG. 5.

Additionally in case of process plant, there are some obvious outliers which can arise due to malfunction of particular instruments which are also identified at step 306.

At step 308, each parameter in the filtered data is checked for frequency of occurrence or availability. Herein, the terms frequency of occurrence and availability have been used interchangeably throughout the description. Based on the frequency of occurrence the parameters in the filtered data is classified into three categories such as V_{EMWA}, V_{EM} and V_{LVCF}. The step 308 is carried out by the availability module 220 present within the multivariate imputation module 218 (FIG. 2). A parameter which has an availability of more than 96% is categorized as V_{EMWA}, the parameter which has an availability of more than 70% but less than 90% is categorized as V_{EM} and the parameter which has an availability of less than 70% is categorized as V_{LVCF}. At step 310, based on the categorization at step 308, a missingness pattern analysis is carried out by the missingness pattern analysis module 222 present within the multivariate imputation module 218(FIG. 2). The missingness pattern of the multiple parameters present within the filtered data are categorized as V_{SEASONAL} or V_{UNSEASONAL} based on the seasonality of availability (a pattern for recording the data, e.g. is the data available once a week) of the parameter.

At step 312, based on step 308 and step 310, the missing values of the parameters are computed utilizing exponentially weighted moving average method, expectation maximization time series imputation method and last value carried forward method. The parameters categorized as V_{EMWA} are imputed utilizing exponentially weighted moving average method and the parameters categorized as V_{LVCF} are imputed utilizing last value carried forward method. Whereas the parameters categorized as V_{EM} are imputed utilizing integrated imputed data from V_{LVCF} and V_{EWMA} to form a single dataset and use the effect of all parameters on missing parameters to obtain imputed data. Hence expectation maximization (EM) time series imputation method is used to impute rest of the variables.

At step 314, the imputed data is clustered into various data sets using a K-means method based on different operating regimes to obtain a first set of clusters. The number of optimum clusters is calculated using a Silhouette method. For example, load might be changed from 50% to 100%. The conditions at 50% will be different from the conditions at 100%. These different operating conditions are identified using clustering.

At step 316, after the clustering is complete, the iteration starts again from step 306. After the completion of the second round of iteration a second set of clusters is obtained. If the second set of clusters is similar to the first set of clusters, then the loop exit criteria is fulfilled and the process ends. If the two consecutives cluster sets are not similar then the loop exit criteria is not met and the iterative process continues from step 306. The iterative process continues till the time two consecutive sets of clusters are found to be similar and this concludes the technique of data pre-processing.

FIG. 4 illustrates a flow diagram depicting the process flow of method 400 of data filtering, in accordance with an example embodiment. In an embodiment, the process 400 may be embodied or executed in a system, for instance the system 200 (FIG. 2) through the data filtering module 214 (FIG. 2). The raw data archived from one or more sources is received by the system 200. The process 400 illustrates a preliminary cleaning of the raw data. At step 402, the parameters which have negligible variance or zero interquartile range (IQR) are removed. At step 404, the data obtained is filtered by removing one or more obvious outliers, the data which are remote to other parameters. Herein, an example of the obvious outliers is when a particular instrument is malfunctioning, a value such as -99999 might be generated which is an obvious outlier. The obvious outliers are removed by defining a lower and an upper cut off value based on the nature of the raw data. At step 406, a variable critical parameter is identified using domain knowledge such as raw material quality, production data and the like. These parameters are refrained from removal of outliers, whereas from other parameters, outside domain values are removed (for example, for a specific plant, the value of parameter has to lie between -10e5 to 10e8, then all other values outside this range are removed) to obtain the integrated data. The integrated data is then utilized for outlier analysis by the system 200 as illustrated by FIG. 5.

FIG. 5 illustrates a flow diagram depicting an exemplary process flow of method 500 for outlier analysis, in accordance with an example embodiment. In an embodiment, the process 500 may be embodied or executed in a system, for instance the system 200 (FIG. 2) through the multi-level outlier analysis module 216 (FIG. 2). The integrated data obtained from the data filtering module 214 is utilized for outlier analysis. At first parameters are identified on which outlier analysis should not be carried out. The outlier analysis is then carried out on the remaining number of parameters. The first level of the multi-level outlier analysis module 214 includes one or more domain knowledge based outlier models. The domain knowledge based outlier models remove outliers based on domain of the parameters. For example, in a process plant data there cannot be temperature values which are negative; hence the parameters for temperature data which have a negative value are considered as outliers and are removed.

Further, the second level of multi-level outlier analysis module 214 includes the box and whisker model and z-score model which are arranged in a hierarchical structure. At step 602, it is analyzed whether a parameter has to refrain from outlier analysis, if yes then the outlier analysis is stopped at step 604. If not, at step 606, a first amount of outliers is calculated using the box and whisker model with a factor α (for example α =3). At step 608, the first amount of outliers is compared with a pre-defined threshold value. At step 610, if the first amount of outliers is less than a pre-defined threshold value then the outliers are removed using the box and whisker model. If the first amount of outliers is equal to or greater than the pre-defined threshold value, then a second amount of outliers is calculated using the box and whisker model with a factor 2α (for example 2α =6) as in step 612 and also using the z-score model with factor β (for example β =3) as in block 614. The second amount of outliers obtained from both the box and whisker model and the z-score model is compared at step 616, and the model providing lesser second amount of outliers is utilized for removing the outliers from the integrated data to obtain the filtered data. For example, if the second amount of outliers obtained by the box and wisher model with a factor 2α is greater than the second amount of outliers obtained by the z-score model with factor β, the z-score model is utilized to remove the outliers at step 618, otherwise by the box and wisher model is utilized to remove the outliers at step 620 for a particular parameter. The filtered data is further utilized to obtain imputed data by the system 200 as described further in FIG. 6.

FIG. 6 illustrates a flow diagram depicting an exemplary process flow of method 600 for availability analysis, in accordance with an example embodiment. In an embodiment, the process 600 may be embodied or executed in a system, for instance the system 200 (FIG. 2) through the multivariate imputation module 218 (FIG. 2). After outlier analysis, to assess the availability of various parameters in the filtered data, data availability statistics is carried out by the availability module 220 and the missingness pattern analysis (MPA) module 222. At step 602, the availability of parameters are checked by the availability module 220. Herein, availability of parameters refers to the percent of times the parameter has certain values. For example, the temperature of a process plant has been measured everyday but the data may be missing for only 10 days out of 100, in such a case the parameter temperature would be considered to have an availability of 90%. Based on the availability of the parameters they are categorized as V_{EWMA}, V_{EM} and V_{LVCF} to impute using various methods. At step 604, the parameters which have an availability of 96% or more are labeled as V_{EWMA} At step 606, the parameters which have an availability between 70% and 96% or more are labeled as V_{EM}. At step 608, the parameters which have an availability of less than or equal to 70% are taken into consideration by the MPA module 222 for analysis. The condition of 70% is relaxed for key input parameters such as raw materials quality in case of process plant, since, the missingness in such parameters are attributed to less number of sampling as the analysis are generally carried out manually or due to various other reasons. At step 610, the parameters which do not follow a pattern are discarded. For example, the raw material parameters which do not follow any kind of pattern in missingness are excluded from analysis by the MPA module 222. At step 612, MPA module 222 classifies the parameters as V_{LVCF} which have an availability of less than 70% and the missingness pattern is seasonal. Missingness pattern is the pattern of data availability of parameter over time, for example, the data might be available for 2 days, then unavailable for 2 days such a parameter is considered to be seasonal in nature, whereas if the parameter is available only once a week or once a fortnight such a parameter is considered to be unseasonal in nature. Infrequent sampling of data (such as laboratory data) is taken into consideration. Classification of the parameters as seasonal and unseasonal is further described in FIG. 7.

FIG. 7 illustrates a flow diagram depicting an exemplary process flow of method 700 for missingness pattern seasonality check, in accordance with an example embodiment. In an embodiment, the process 700 may be embodied or executed in a system, for instance the system 200 (FIG. 2) through the MPA module 222 (FIG. 2). The MPA module 222 identifies the nature of missingness of the parameters as seasonal or unseasonal. The MPA module 222 is based on gene mapping to convert missingness to alphabets and non-missing values to some another alphabet. Frequency of each missingness pattern is calculated in whole parameter timeline based on text mining algorithms/rules. The missingness pattern is searched for in parameters whose contribution to missingness is maximum. If a particular parameter exhibits a type of missingness the maximum number of times with other pattern's occurrence being close to zero then the variable is termed as Infrequently Sampled or seasonal variable (for example, a quality parameter which is measured once a week). The process of imputation of the missing data is described by FIG. 8.

FIG. 8 illustrates a flow diagram depicting an exemplary process flow of method 800 of multivariate imputation, in accordance with an example embodiment. In an embodiment, the process 800 may be embodied or executed in a system, for instance the system 200 (FIG. 2) through the multivariate imputation module 218 (FIG. 2). The various categories of data obtained from the availability module 220 are imputed utilizing the following models:
i) **V_{LVCF}** parameters are imputed utilizing an univariate model of last value carried forward in which a last observed value is copied to all missing values till a next value is observed. The univariate imputation model is utilized as the missingness pattern in **V_{LVCF}** parameters are intentionally measured once in a while as it is assumed that the **V_{LVCF}** parameters don not vary much.
ii) **V_{EWMA}** parameters are imputed by utilizing an exponentially weighted time series imputation model as the parameters have a missingness pattern of less than 4% and not in mass.
iii) **V_{EM}** parameters are imputed by integrating the imputed data from V_{LVCF} and V_{EWMA} with V_{EM} to form a single dataset and utilize the effect of all parameters on missing variables using multivariate imputation models. Hence expectation maximization (EM) time series imputation model is utilized to impute rest of the parameters. In EM model imputation is performed by taking into account time series trend as well as multivariate relations.

The imputed data obtained from the multivariate imputation module 218 is further utilized for clustering by the clustering module. Since data can be in different clusters, single set of operation of outlier removal and imputation on entire dataset may mislead to erroneous results, hence an iterative process is implemented.

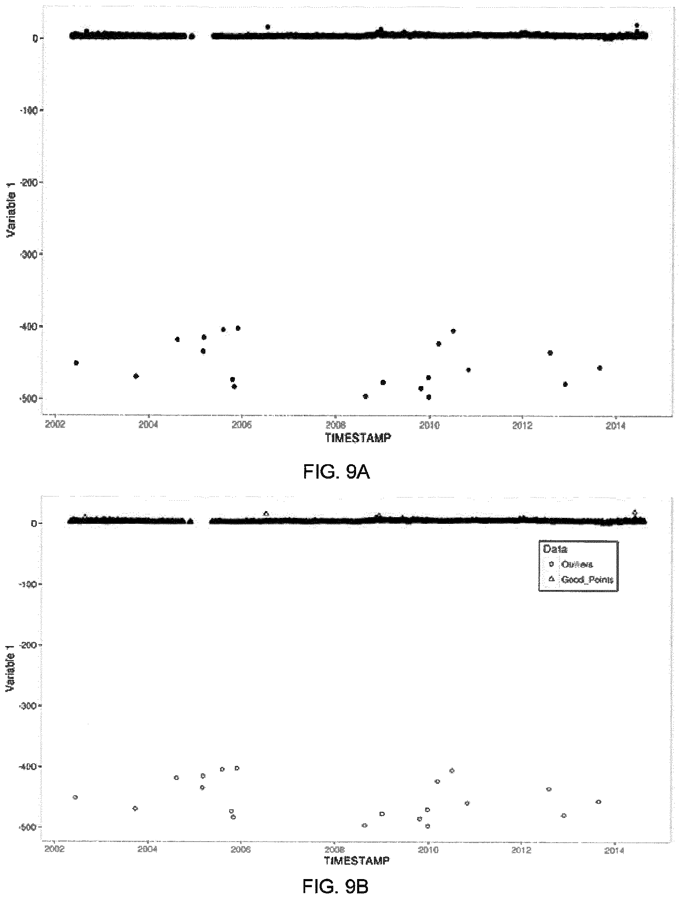

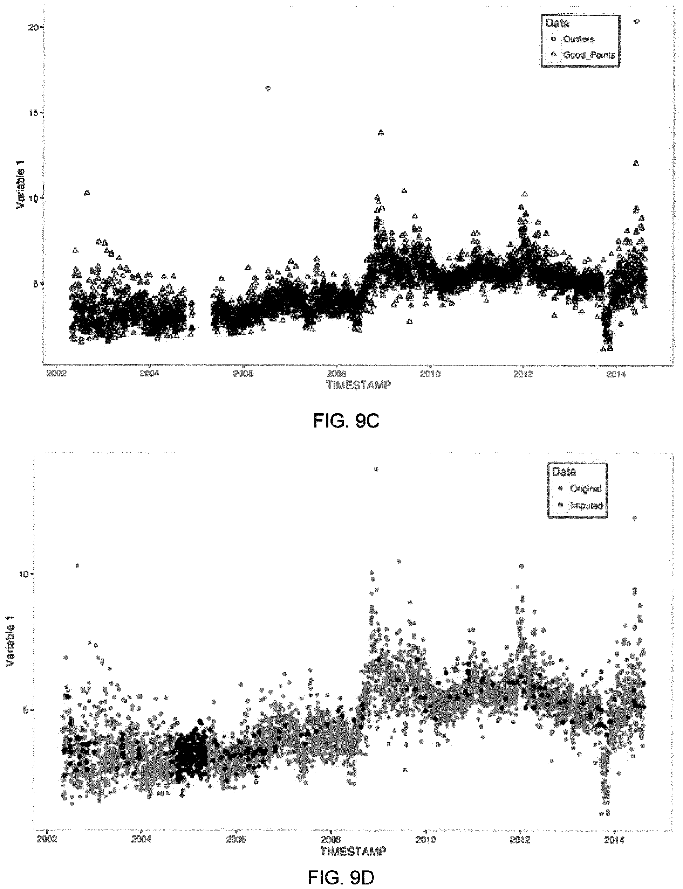

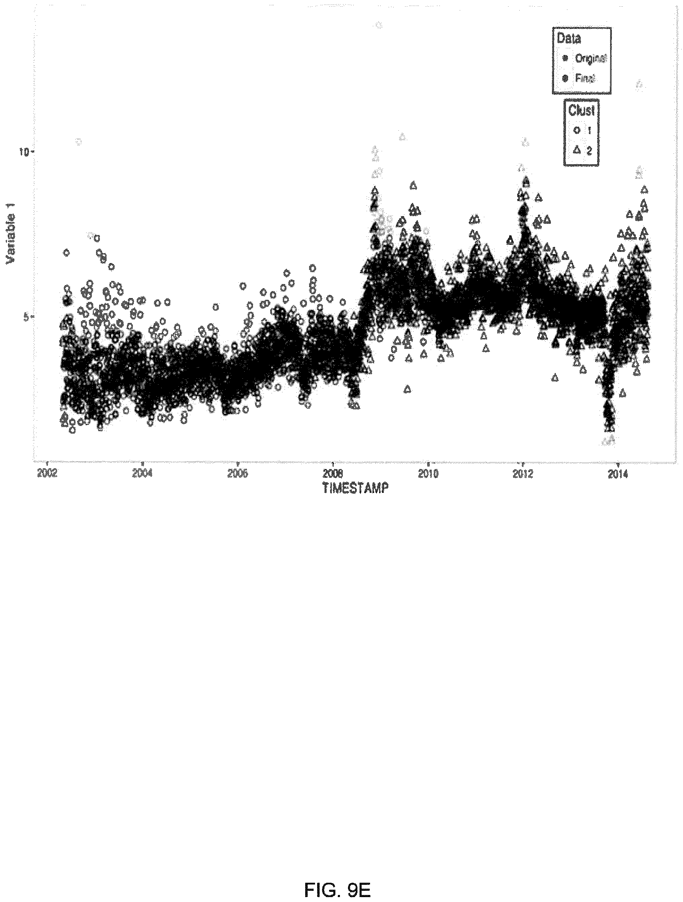

FIGS. 9A, 9B, 9C, 9D and 9E illustrate a flow diagram depicting an exemplary of data sets obtained by data pre-processing. FIG 9A illustrates a raw data obtained from various data sources. FIG. 9B illustrates the integrated data after removal of outliers utilizing domain knowledge based outlier models. Further, FIG. 9C illustrates the filtered data after removal of outliers by the multi-level outlier analysis module present in the system.

FIG. 9D illustrates the imputed data obtained after imputation is carried out by the multivariate imputation module. FIG. 9E illustrates the final data obtained after the last iteration of outlier removal and imputation by the system.

The present system for data pre-processing provides an integrated rule based and knowledge based approach to choosing from a variety of outlier analysis models automatically for a data set depending on the distribution of the parameters. The system also performs identification of key quality parameters whose sampling frequencies are low. Further, the system takes into account various operating regimes while carrying out the pre-processing steps. During the imputation stage, there are chances of a value being imputed by an outlier for that particular observation and this is taken into consideration by the system while performing clustering process. Furthermore, the system for data pre-processing provides an iterative procedure with minimal user input to perform outlier analysis and multivariate imputation.

The foregoing description of the specific implementations and embodiments will so fully reveal the general nature of the implementations and embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A processor-implemented method for data pre-processing associated with a manufacturing process , the method comprising:
performing a plurality of iterations for processing an integrated data associated with the manufacturing process, wherein at least one iteration of the plurality of iterations comprises:
removing one or more outliers from the integrated data using a multi-level outlier model to obtain a filtered data, the filtered data being associated with a plurality of parameters indicative of the manufacturing process;
categorizing the filtered data into a plurality of categories to identify missing data from the filtered data, wherein the categorizing is based on a frequency of occurrence of one or more parameters of the plurality of parameters in the filtered data;
selectively imputing the missing data based at least on one of the plurality of categories of the missing data to obtain imputed data; and
clustering the imputed data into one or more data clusters based on at least one predefined criteria associated with a plurality of operating conditions of the manufacturing process; and determining after every iteration of the plurality of iterations, whether the imputed data associated with a current iteration is clustered into the one or more data clusters associated with a previous iteration,
wherein the plurality of iterations are performed until the one or more data clusters in the previous iteration and the current iterations are determined to be similar.

2. The method as claimed in claim 1, further comprising filtering a raw data associated with the manufacturing process to obtain the integrated data.

3. The method as claimed in claim 1, wherein the multi-level outlier removal model comprises filtering the one or more outliers using a plurality of outlier removal models in a hierarchical order, the plurality of outlier removal models comprises one or more domain knowledge based outlier models, a box and whisker model and a z-score model.

4. The method as claimed in claim 3, wherein filtering the one or more outliers comprises:
filtering a first set of outliers from the integrated data to obtain filtered integrated data using at least one of the one or more domain knowledge based outlier models;
filtering a second set of outliers from the filtered integrated data by:
computing a first amount of outliers in the filtered integrated data by using the box and whisker model; and
performing, based on a comparison of the first amount of outliers with a threshold amount of outliers, one of:
upon determination of the first amount of outliers to be more than or equal to the threshold amount of the outliers, computing a second amount of outliers using each of the box and whisker model and z-score model, and further selecting an outlier removal model from amongst box and whisker model and z-score model that is associated with a least number of outliers in the second amount of outliers to filter the second set of outliers, and
upon determination of the first amount of outliers to be less than the threshold amount of the outliers, utilizing the box and whisker model for filtering the second set of outliers.

5. The method as claimed in claim 1, wherein the plurality of categories of the plurality of parameters comprises at least one of V_{EWMA} (exponentially weighted time series), V_{EM} (expectation maximization) and V_{LVCF} (last value carried forward)

6. The method as claimed in claim 5, wherein classification of the plurality of parameters in the V_{LVCF} category comprises computing a missingness pattern to identify one or more parameters available at selective intervals within the integrated data.

7. A processor-implemented system for data pre-processing associated with a manufacturing process, the system comprising:
one or more hardware processors ; and
at least one memory, the at least one memory coupled to the one or more hardware processors, wherein the one or more hardware processors are configured by instructions to:
perform a plurality of iterations for processing an integrated data associated with the manufacturing process, wherein to perform an iteration of the plurality of iterations, the one or more hardware processors are configured by instructions to:
remove one or more outliers from the integrated data using a multi-level outlier model to obtain a filtered data, the filtered data being associated with a plurality of parameters indicative of the manufacturing process;
categorize the filtered data into a plurality of categories to identify missing data from the filtered data, wherein categorizing is based on a frequency of occurrence of one or more parameters of the plurality of parameters in the filtered data;
selectively impute the missing data based at least on one of the plurality of categories of the missing data to obtain imputed data; and
cluster the imputed data into one or more data clusters based on at least one predefined criteria associated with operating conditions of the manufacturing process; and determine whether the imputed data associated with a current iteration is clustered into the one or more data clusters associated with a previous iteration after each iteration of the plurality of iterations,
wherein the plurality of iterations are performed until the one or more data clusters in the previous iteration and the current iteration are determined to be similar.

8. The system as claimed in claim 7, wherein the one or more hardware processors are capable of executing programmed instructions to filter a raw data associated with the manufacturing process to obtain the integrated data.

9. The system as claimed in claim 7, wherein the multi-level outlier removal model is configured to filter the one or more outliers using a plurality of outlier removal models in a hierarchical order, the plurality of outlier removal models comprises one or more domain knowledge based outlier models, a box and whisker model and a z-score model.

10. The system as claimed in claim 9, wherein to filter the one or more outliers, the one or more hardware processors are capable of executing programmed instructions to:
filter a first set of outliers from the integrated data to obtain filtered integrated data using at least one of the one or more domain knowledge based outlier models;
filter a second set of outliers from the filtered integrated data by:
computing a first amount of outliers in the filtered integrated data by using the box and whisker model; and
performing, based on a comparison of the first amount of outliers with a threshold amount of outliers, one of:
upon determination of the first amount of outliers to be more than or equal to the threshold amount of the outliers, compute a second amount of outliers using each of the box and whisker model and z-score model, and further selecting an outlier removal model from amongst box and whisker model and z-score model that is associated with a least number of outliers in the second amount of outliers to filter the second set of outliers, and
upon determination of the first amount of outliers to be less than the threshold amount of the outliers, utilize the box and whisker model for filtering the second set of outliers.

11. The system as claimed in claim 6, wherein the plurality of categories of the plurality of parameters comprises at least one of V_{EWMA}, (exponentially weighted time series), V_{EM} (expectation maximization) and V_{LVCF} (last value carried forward)

12. The system as claimed in claim 11, wherein classification of the plurality of parameters in the V_{LVCF} category comprises computing a missingness pattern to identify one or more parameters available at selective intervals within the integrated data.

13. A non-transitory computer-readable medium having embodied thereon a computer program for executing a method for data pre-processing associated with a manufacturing process, the method comprising:
performing a plurality of iterations for processing an integrated data associated with the manufacturing process, wherein at least one iteration of the plurality of iterations comprises:
removing one or more outliers from the integrated data using a multi-level outlier model to obtain a filtered data, the filtered data being associated with a plurality of parameters indicative of the manufacturing process;
categorizing the filtered data into a plurality of categories to identify missing data from the filtered data, wherein the categorizing is based on a frequency of occurrence of one or more parameters of the plurality of parameters in the filtered data;
selectively imputing the missing data based at least on one of the plurality of categories of the missing data to obtain imputed data; and
clustering the imputed data into one or more data clusters based on at least one predefined criteria associated with a plurality of operating conditions of the manufacturing process; and
determining after every iteration of the plurality of iterations, whether the imputed data associated with a current iteration is clustered into the one or more data clusters associated with a previous iteration,
wherein the plurality of iterations are performed until the one or more data clusters in the previous iteration and the current iterations are determined to be similar.
